Europäisches Patentamt

European Patent Office

Office européen des brevets

(11) Veröffentlichungsnummer: **0 350 532 B1**

# EUROPÄISCHE PATENTSCHRIFT

(45) Veröffentlichungstag der Patentschrift: **26.02.92**

(51) Int. Cl.⁵: **G01B 21/04**

(21) Anmeldenummer: **88118619.1**

(22) Anmeldetag: **09.11.88**

(54) **Prüfkörper für Koordinaten-Messgeräte.**

(30) Priorität: **13.07.88 DE 3823684**

(43) Veröffentlichungstag der Anmeldung:
**17.01.90 Patentblatt 90/03**

(45) Bekanntmachung des Hinweises auf die
Patenterteilung:
**26.02.92 Patentblatt 92/09**

(84) Benannte Vertragsstaaten:
**DE FR GB IT NL**

(56) Entgegenhaltungen:
**DE-A- 3 503 779**
**FR-A- 2 512 542**
**US-A- 4 282 688**

(73) Patentinhaber: **URANIT GmbH**
**Stetternicher Staatsforst**
**W-5170 Jülich(DE)**

(72) Erfinder: **Schmitz, Bernd-Horst**
**Obersteinstrasse 58**
**W-5190 Stolberg(DE)**
Erfinder: **Jesch, Joachim**
**Josef-Gunich-Strasse 22**
**W-7160 Düren(DE)**
Erfinder: **Corr, Horst**
**Nordring 47e**
**W-5132 Übach-Palenberg(DE)**
Erfinder: **Hackenberg, Rudolf**
**Zur Kalkbahn**
**W-5163 Langerwehe-Jüngersdorf(DE)**

(74) Vertreter: **Gottlob, Peter**
**Kernforschungszentrum Karlsruhe GmbH**
**Abt. PAL Weberstrasse 5 Postfach 3640**
**W-7500 Karlsruhe 1(DE)**

## Beschreibung

Die Erfindung betrifft einen Prüfkörper für Koordinaten-Meßgeräte gemäß dem Oberbegriff von Patentanspruch 1.

Für die Feststellung und die Überwachung der Genauigkeit von Koordinatenmeßgeräten können Prüfkörper eingesetzt werden (s. Technisches Messen, 50. Jahrgang 1983, Heft 5, Seiten 179 - 184), die die Ermittlung und Überprüfung charakteristischer Kenngrößen gestatten.

Ein gattungsgemäßer Prüfkörper ist in Abschnitt 5 der VDI Berichte 529, VDI-Verlag GmbH, Düsseldorf, 1984, Seite 15, dargestellt und beschreiben. Er besteht aus einem massiven, plattenförmigen Grundkörper, der insgesamt fünf formschlüssig gehaltene Kugeln trägt. Vier Kugeln liegen in einer Ebene, eine Kugel ist in einer Höhe von 300 mm darüber angeordnet. Die Basislänge zwischen den im Quadrat angeordneten Kugeln beträgt 600 mm. Beim Einsatz eines derartigen Prüfkörpers ist der Einfluß der Umgebungsbedingungen auf die Meßergebnisse zu berücksichtigen. Als besonders kritische Einflußgröße ist die Temperatur anzusehen, da sich Temperaturschwankungen auf die Geometrie des Prüfkörpers auswirken. Vor allem können z.B. Temperaturgradienten innerhalb des Prüfkörpers praktisch nicht ermittelt und rechnerisch kompensiert werden.

Der Erfindung liegt die Aufgabe zugrunde, einen Prüfkörper der gattungsgemäßen Bauart zu schaffen, dessen geometrische Abmessungen praktisch temperaturunabhängig sind.

Zur Lösung dieser Aufgabe werden die im Kennzeichen von Patentanspruch 1 genannten Maßnahmen vorgeschlagen. Die hierauf bezogenen abhängigen Ansprüche beinhalten vorteilhafte Ausgestaltungen dieser Lösung.

Kohlenfasern oder Aramidfasern haben in bezug auf ihre Längserstreckung einen negativen Wärmeausdehnungskoeffizienten. Rohrförmige Schichten aus Kreuzwicklungen mit derartigen Fasern bewirken daher, daß sich das Rohr bei Temperaturerhöhung verkürzt, während die Halterungen aus Stahl, z.B. Invar, sich ausdehnen. Durch Optimierung des Wickelwinkels der Fasern für die Kreuzwicklungen kann erreicht werden, daß sich die Ausdehnung der Halterungen und die Verkürzung der Faserverbundrohre kompensieren; d.h. die Speichen und die Nabe, und damit der gesamte Prüfkörper, erfahren auch bei Temperaturschwankungen keine Änderung ihrer Geometrie.

Der Haltering für die Speichen kann ebenfalls aus Faserverbundwerkstoff bestehen, womit dieses Meßwerkzeug sehr leicht und handlich wird.

Ein Ausführungsbeispiel der Erfindung wird im folgenden anhand der Zeichnungen erläutert:
Der Grundkörper hat die Gestalt eines Speichenrades mit vier in einer Ebene liegenden, um 90° gegeneinander versetzten Speichen 1. Die Speichen 1 werden von einer zentralen, auf den Speichen 1 senkrecht stehenden Nabe 2 und einem äußeren Ring 3, den die Speichen 1 durchdringen, gehalten. Speichen 1 und Nabe 2 sind rohrförmig ausgebildet, wobei der Durchmesser der Nabe 2 größer ist als der der Speichen 1. In die freien, aus dem Ring 3 herausragenden Enden der Speichen 1 sind massive Halterungen 1a aus Invar (Ni 36) eingeklebt, die Kugeln 1b aus Glaskeramik (Handelsbezeichnung "Zerodur") tragen. Die Kugeln sind über fest integrierte Gewindebolzen 1c aus Stahl, Tellerfedern 1d und Muttern 1e (siehe Schnitt "A") mit den Halterungen verschraubt. Die Kugeln sitzen in kalottenförmigen Aussparungen der Halterungen. Anstelle von Kugeln können je nach Anwendungsfall auch andere Meßkörper, z.B. Zylinder, verwendet werden. Die Halterung 2a, die die Kugel 2b für die Nabe 2 trägt, ist in eine Gewindehülse 2c, die in die Nabe 2 eingeklebt ist, eingeschraubt.

Die rohrförmigen Bestandteile der Speichen 1 und der Nabe 2 bestehen aus einem Faserverbundwerkstoff in Form von übereinander gewickelten, sich abwechselnden Schichten aus Umfangswicklungen und Kreuzwicklungen. Bei Verwendung von Kohlenstoffasern liegt der Wickelwinkel der Fasern, gegen die Rohrlängsachse gemessen, zwischen 10° und 25°, vorzugsweise bei 15° bis 20°. Bei Verwendung von Aramidfasern ist ein größerer Wickelwinkel von ca. 30° vorzusehen, da Aramidfasern einen größeren negativen Wärmeausdehnungskoeffizienten haben als Kohlenstoffasern. Für die Umfangswicklungen können auch Fasern mit einem positiven Wärmeausdehnungskoeffizienten in bezug auf ihre Längserstreckung verwendet werden, z.B. Glasfasern.

Bei Kohlenfasern beträgt das Verhältnis der Schichtdicken von Kreuzwicklungen zu Umfangswicklungen etwa 2:1 bis 3:1, bei Aramidfasern vorzugsweise 1:2.

Der Ring 3 besteht ebenfalls aus Faserverbundwerkstoff und ist ebenso wie die Nabe 2 mit den Speichen 1 verklebt. Außerdem trägt der Ring 3 drei um 120° gegeneinander versetzte Justierfüße 3a am unteren Rand des Ringes 3.

### Bezugszeichenliste

| | |
|---|---|
| 1 | Speichen |
| 1a | Halterung |
| 1b | Kugel |
| 1c | Gewindebolzen |
| 1d | Tellerfedern |
| 1e | Mutter |
| 2 | zentrale Nabe |
| 2a | Halterung |

2b      Kugel
2c      Gewindering
3       äußerer Ring
3a      Justierfüße

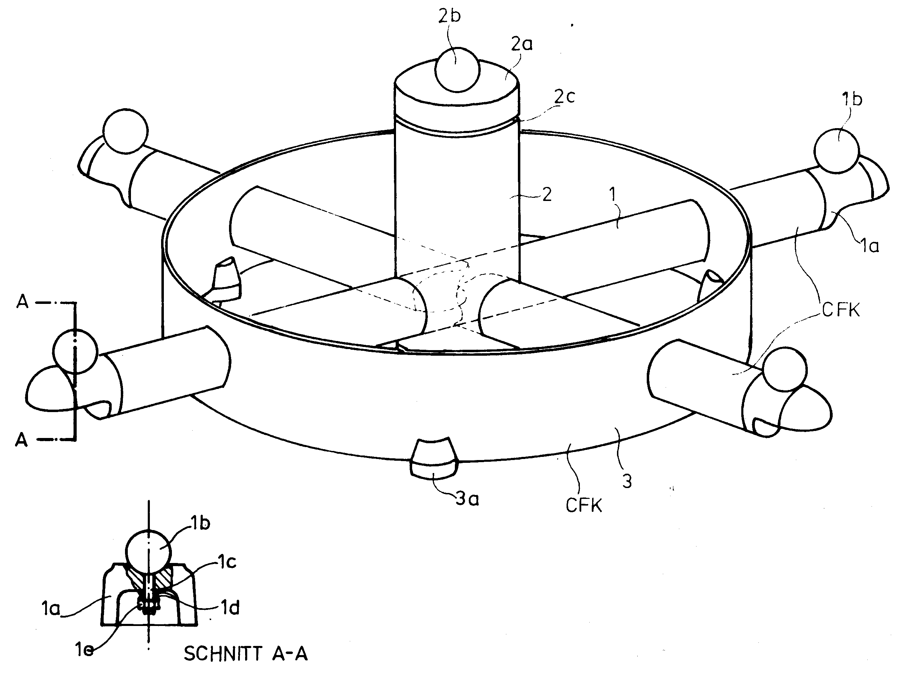

**Patentansprüche**

1.  Prüfkörper für Koordinaten-Meßgeräte, mit einem Grundkörper, der mehrere formschlüssig gehaltene Kugeln (1b, 2b) zum Prüfen der X-, Y- und Z-Koordinaten des Meßgeräts trägt, gekennzeichnet durch folgende Merkmale:

    a) der Grundkörper hat die Gestalt eines Speichenrades, dessen Speichen (1) von einer zentralen Nabe (2) und einem äußeren Ring (3), den die Speichen (1) durchdringen, gehalten sind;
    b) die Speichen (1) und die hierauf senkrecht stehende Nabe (2) sind rohrförmig ausgebildet und tragen an ihren freien Enden Halterungen (1a, 2a, 2c), mit denen die Kugeln (1b, 2b) verbunden sind;
    c) die rohrförmigen Bestandteile der Speichen (1) und der Nabe (2) bestehen aus einem Faserverbundwerkstoff, bei dem sich Schichten aus Umfangswicklungen und Kreuzwicklungen abwechseln;
    d) die Kreuzwicklungen sind mit einer Faser gewickelt, die einen negativen Wärmeausdehnungskoeffizienten hat; die Halterungen (1a, 2a, 2c) und die Kugeln (1b, 2b) bestehen aus einem harten Werkstoff wie Invar, Quarzglas oder Keramik, der einen positiven Wärmeausdehnungskoeffizienten hat.

2.  Prüfkörper nach Anspruch 1, dadurch gekennzeichnet, daß der Ring (3) ebenfalls aus Faserverbundwerkstoff besteht.

3.  Prüfkörper nach Anspruch 1 und 2, dadurch gekennzeichnet, daß die Speichen (1) mit der Nabe (2) und dem Ring (3) durch Kleben miteinander verbunden sind.

**Claims**

1.  Tester for co-ordinate-measuring devices, having a basic body, which is provided with a plurality of balls (1b, 2b), which are retained in a form-fitting manner, for testing the X-, Y- and Z-co-ordinates of the measuring device, characterised by the following features:

    a) the basic body has the configuration of a spoked wheel, the spokes (1) of which are retained by a central hub (2) and an outer ring (3), through which the spokes (1) extend;
    b) the spokes (1) and the hub (2), which is situated at right angles thereto, have a tubular configuration and are provided, at their free ends, with holders (1a, 2a, 2c), to which the balls (1b, 2b) are joined;
    c) the tubular component parts of the spokes (1) and of the hub (2) are formed from a composite fibrous material, wherein layers of circumferential windings and crosswise windings alternate with one another;
    d) the crosswise windings are wound with a fibre which has a negative coefficient of thermal expansion; the holders (1a, 2a, 2c) and the balls (1b, 2b) are formed from a hard material, such as invar, quartz glass or ceramic material, which has a positive coefficient of thermal expansion.

2.  Tester according to claim 1, characterised in that the ring (3) is also formed from a composite fibrous material.

3.  Tester according to claims 1 and 2, characterised in that the spokes (1) are joined to the hub (2) and the ring (3) by being adhered thereto.

**Revendications**

1.  Calibre pour des instruments de mesure de coordonnées, comportant un corps de base, qui porte plusieurs sphères (1b, 2b) maintenues en liaison par la forme, destinées à tester les coordonnées X, Y, Z de l'instrument de mesure, caractérisé par les éléments suivants :
    a) le corps de base a la configuration d'une roue à rayons, dont les rayons (1) sont maintenus par un moyeu (2) central et un anneau extérieur (3) traversé par les rayons (1),
    b) les rayons (1) et le moyeu (2) perpendiculaire à ceux-ci sont réalisés en forme de tubes et portent à leur extrémité libre, des supports (1a, 2a, 2c) avec lesquels les sphères (1b, 2b) sont liées,
    c) les constituants tubulaires des rayons (1) et du moyeu (2) sont réalisés en un matériau composite renforcé par fibres, dans lequel sont alternées des couches d'enroulements circonférentiels et d'enroulements croisés,
    d) les enroulements croisés sont effectués avec une fibre, qui a un coefficient de dilatation thermique négatif; les supports (1a, 2a, 2c) et les sphères (1b, 2b) sont réalisés en un matériau dur comme l'invar, le verre quartzeux ou la céramique, qui a un coefficient de dilatation thermique positif.

2. Calibre selon la revendication 1, caractérisé en ce que l'anneau (3) est réalisé également en un matériau composite renforcé par fibres.

3. Calibre selon les revendications 1 et 2, caractérisé en ce que les rayons (1) sont assemblés par collage avec le moyeu (2) et l'anneau (3).

SCHNITT A-A